# EUROPEAN PATENT APPLICATION

(11) **EP 4 789 938 A1**
(43) Date of publication of application: **12.08.2026**
(21) Application number: 26151588.6
(22) Date of filing: 13.01.2026
(51) Int. Cl.: B60W 30/09, B60W 30/095, B60W 30/16, B60W 50/00

(54) **CONTROL DEVICE AND CONTROL METHOD**

(30) Priority: 10.02.2025 JP 2025020129
(71) Applicant: Robert Bosch GmbH, 70442 Stuttgart (DE)
(72) Inventor: Takii, Hiromasa, Kanagawa, 2248501 (JP)

(57) **Abstract**

To provide a control device that executes a control mode in which a positional relationship adjustment operation is executed to adjust a positional relationship between a motorcycle equipped with a camera and a vehicle preceding the motorcycle to a target positional relationship, and that can improve stability of a vehicle body behavior of the motorcycle and safety of a rider of the motorcycle in the control mode.

The control device includes an execution section that executes the control mode in which the positional relationship adjustment operation is executed to adjust the positional relationship between the motorcycle and the vehicle preceding the motorcycle to the target positional relationship, where the preceding vehicle is detected by the camera mounted on the motorcycle, and in the control mode, the execution section predicts a sudden change in an amount of light in surrounding environment of the motorcycle based on road environment information ahead of the motorcycle, and when such a sudden change is predicted, executes a safety operation for the rider of the motorcycle.

## Description

### BACKGROUND OF THE INVENTION

### 1. Field of the Invention

The present disclosure relates to a control device and a control method for controlling a behavior of a motorcycle.

### 2. Description of the Background Art

In a recent year, there has been known a technique for assisting a rider in driving a saddle type vehicle such as a motorcycle. For example, JP2009-116882A discloses a rider assistance system that warns a rider of a motorcycle that he or she is inappropriately approaching an obstacle based on information detected by a sensor device that detects obstacles in a traveling direction or substantially in a traveling direction.

### SUMMARY OF THE INVENTION

A motorcycle has fewer wheels supporting a vehicle body than a four-wheeled vehicle, and a distance between the wheels is shorter than that of a four-wheeled vehicle, so a degree to which the vehicle body leans or pitches is greater than that of a four-wheeled vehicle. Therefore, when a motorcycle suddenly decelerates, stability of a vehicle body behavior of the motorcycle and safety of a driver (that is, rider) may be lower than in four-wheeled vehicles such as automobiles.

Incidentally, one technique for assisting motorcycle driving is a positional relationship adjustment operation that automatically accelerates or decelerates the own vehicle to adjust a positional relationship between the own vehicle and a preceding vehicle to a target positional relationship. Here, from a viewpoint of design, cost, and mounting position on the motorcycle, a camera may be used as a surrounding environment sensor for detecting a preceding vehicle in a control mode in which the positional relationship adjustment operation is performed. In this case, when an amount of light in surrounding environment suddenly changes while the motorcycle is traveling (for example, when the motorcycle moves from a brighter area to a darker area), it is expected that the camera will be delayed to acquire information about the surrounding environment immediately after the sudden change in the amount of light. This is because it takes a certain time (for example, several milliseconds to several seconds) for a field of view of the camera to adapt to the sudden change in the amount of light.

When the camera is delayed to acquire information about the surrounding environment, for example, detection of the preceding vehicle after a sudden change in the amount of light in the surrounding environment may be delayed, and the motorcycle and the preceding vehicle may become closer in position than before the sudden change, which may cause the motorcycle to suddenly decelerate. It is also necessary to consider a possibility that sudden deceleration of the motorcycle may reduce stability of a vehicle body behavior of the motorcycle and safety of the rider of the motorcycle.

The present invention has been made in light of the above circumstances, and an object of the present invention is to provide a control device that performs a control mode in which a positional relationship adjustment operation is performed to adjust a positional relationship between a motorcycle equipped with a camera and a vehicle preceding the motorcycle to a target positional relationship, and that in this control mode can improve stability of a vehicle body behavior of the motorcycle and safety of a rider of the motorcycle. Another object of the present invention is to provide, in a control device that executes a control mode in which a positional relationship adjustment operation is performed to adjust a positional relationship between a motorcycle equipped with a camera and a vehicle preceding the motorcycle to a target positional relationship, a control method that can improve stability of a vehicle body behavior of the motorcycle and safety of a rider of the motorcycle in this control mode.

To solve the above problem, a control device of the present invention is a control device (16) for controlling a behavior of a motorcycle (1), the control device including an execution section (16b) that executes a control mode in which a positional relationship adjustment operation is executed to adjust a positional relationship between the motorcycle (1) and a preceding vehicle (4) of the motorcycle (1) to a target positional relationship by automatically accelerating or decelerating the motorcycle (1), where in the control mode, the preceding vehicle (4) is detected by a camera (14) mounted on the motorcycle (1), and in the control mode, the execution section (16b) determines whether a sudden change in an amount of light in the surrounding environment of the motorcycle (1) is predicted based on road environment information ahead of the motorcycle (1), and executes a safety operation for a rider of the motorcycle (1) when it is determined that the sudden change is predicted.

To solve the above problem, a control method of the present invention is a control method for controlling a behavior of a motorcycle (1), the control method including executing a control mode by an execution section (16b) of a control device (16) in which a positional relationship adjustment operation is performed to adjust a positional relationship between the motorcycle (1) and a preceding vehicle (4) of the motorcycle (1) to a target positional relationship by automatically accelerating or decelerating the motorcycle (1), detecting the preceding vehicle (4) in the control mode by a camera (14) mounted on the motorcycle (1), and in the control mode, determining by the execution section (16b) whether a sudden change in an amount of light in the surrounding environment of the motorcycle (1) is predicted based on road environment information ahead of the motorcycle (1), and executing a safety operation for a rider of the motorcycle (1) when it is determined that the sudden change is predicted.

According to the present invention, there is provided a control device that executes a control mode in which a positional relationship adjustment operation is performed to adjust a positional relationship between a motorcycle equipped with a camera and a vehicle preceding the motorcycle to a target positional relationship, and in this control mode, can improve stability of a vehicle body behavior of the motorcycle and safety of a rider of the motorcycle. The present invention also provides, in a control device that executes a control mode in which a positional relationship adjustment operation is performed to adjust a positional relationship between a motorcycle equipped with a camera and a vehicle preceding the motorcycle to a target positional relationship, a control method can improve stability of a vehicle body behavior of the motorcycle and safety of a rider of the motorcycle in the control mode.

### BRIEF DESCRIPTION OF THE DRAWINGS

Fig. 1 is a schematic diagram illustrating an example of a schematic configuration of a motorcycle.
Fig. 2 is a block diagram illustrating an example of a functional configuration of a control device.
Fig. 3 is a schematic diagram illustrating a state in which the motorcycle is traveling behind a preceding vehicle of the motorcycle.
Fig. 4 is a schematic diagram illustrating an example of a state before the motorcycle enters a road with a lower amount of light in surrounding environment from a road with a higher amount of light in surrounding environment.
Fig. 5 is a schematic diagram illustrating an example of a state immediately after the motorcycle enters the road with a lower amount of light in surrounding environment from the road with a higher amount of light in surrounding environment.
Fig. 6 is a flowchart illustrating an example of flow (control flow) of processing performed by the control device during execution of a control mode in which a positional relationship adjustment operation is performed to adjust a positional relationship between the motorcycle and the preceding vehicle of the motorcycle to a target positional relationship.
Fig. 7 is a schematic diagram illustrating a state where a tunnel entrance is located ahead of the motorcycle.
Fig. 8 is a schematic diagram illustrating a state where a tunnel exit is located ahead of the motorcycle.
Fig. 9 is a schematic diagram illustrating an example of a situation in which a safety operation can be performed when there is no preceding vehicle traveling ahead of the motorcycle.
Fig. 10 is a schematic diagram illustrating an example of a situation in which the safety operation can be performed when there is no preceding vehicle traveling ahead of the motorcycle.
Fig. 11 is a schematic diagram illustrating an example of a situation in which the safety operation can be performed when there is no preceding vehicle traveling ahead of the motorcycle.
Fig. 12 is a schematic diagram illustrating an example of a state immediately before the motorcycle enters a road environment with a higher amount of light in surrounding environment from a road environment with a lower amount of light in surrounding environment.

### DETAILED DESCRIPTION OF THE INVENTION

Hereinafter, a control device according to the present invention will be described with reference to the drawings.

Configurations, operations, and the like described below are merely examples, and the present invention is not limited to such configurations, operations, and the like.

In addition, in the following, identical or similar descriptions are appropriately simplified or omitted. In addition, in each drawing, the same or similar members or parts are either not designated by symbols or are designated by the same symbols. Furthermore, detailed structures are appropriately simplified or omitted from the illustration.

### <Configuration of Motorcycle>

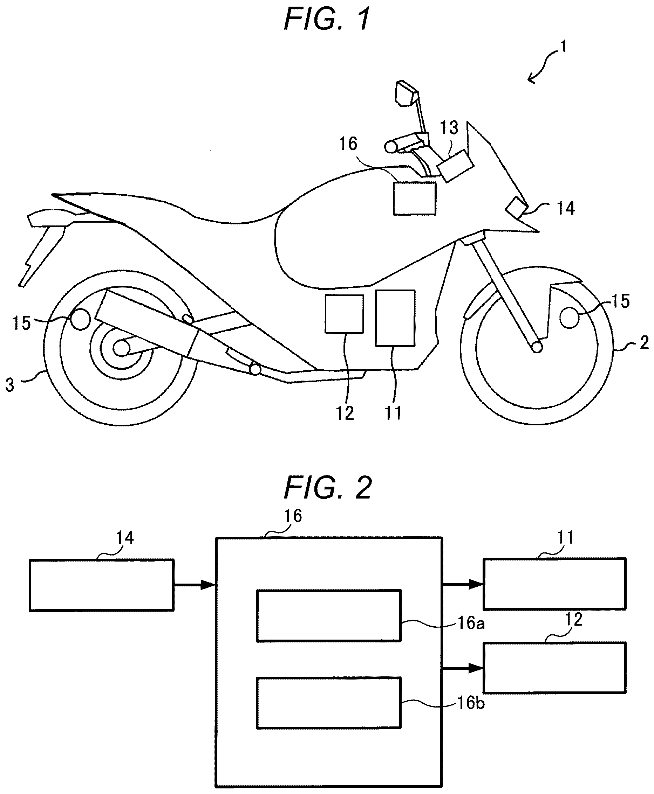

A configuration of a control device 16 according to an embodiment of the present invention and a motorcycle 1 equipped with the control device 16 will be described with reference to Figs. 1 and 2.

Fig. 1 is a schematic diagram illustrating an example of a schematic configuration of the motorcycle 1. In Fig. 1, the motorcycle 1 is illustrated as a two-wheeled motorcycle, but the motorcycle 1 in this embodiment is not limited to this and may be a motorcycle (for example, a three-wheeled motorcycle) other than a two-wheeled motorcycle. Furthermore, for example, the motorcycle 1 may be a motorbike, a scooter, an electric scooter, or the like. The motorcycle 1 may be a motorcycle using an engine as a drive source, or may be a motorcycle using an electric motor as a drive source.

As illustrated in Fig. 1, the motorcycle 1 includes, for example, a drive source 11, a braking force control unit 12, a notification unit 13, a camera 14, a wheel speed sensor 15, and the control device 16. However, the configuration of the motorcycle 1 is not limited to this, and for example, the motorcycle 1 may be configured without at least one of the braking force control unit 12, the notification unit 13, and the wheel speed sensor 15.

The drive source 11 outputs a drive force that is transmitted to a drive wheel (for example, a rear wheel 3) of the motorcycle 1. In this embodiment, the drive source 11 is an engine, but is not limited to this and may be, for example, an electric motor.

The braking force control unit 12 is a unit that controls and adjusts the braking force applied to a wheel of the motorcycle 1. The wheel may be a front wheel 2 and the rear wheel 3 of the motorcycle 1, or may be only the front wheel 2 or only the rear wheel 3. The braking force control unit 12 is, for example, a hydraulic pressure adjusting unit that adjusts a braking force applied to the wheels by adjusting the hydraulic pressure of brake fluid in wheel cylinders (not illustrated). The braking force control unit 12 may be a control unit (so-called brake-by-wire) that controls a position of a braking portion (for example, a brake pad) of the wheel of the motorcycle 1 using an electrical signal.

The notification unit 13 notifies a rider of the information. A notification method includes, for example, visual notification, auditory notification, and the like. Examples of the notification unit 13 include a liquid crystal display, a lamp (for example, an indicator lamp), a buzzer, and the like. A position where the notification unit 13 is provided on the motorcycle 1 is not particularly limited. For example, the notification unit 13 may be provided near a mirror of the motorcycle 1 or may be provided forward of a handlebar of the motorcycle 1. The notification unit 13 may also be provided on an article (a helmet, gloves, or the like) of clothing worn by the rider.

The camera 14 functions as a surrounding environment sensor. In other words, the camera 14 detects surrounding environment information relating to the environment around the motorcycle 1. The camera 14 may be provided, for example, at least in a front part of a vehicle body of the motorcycle 1. In the motorcycle 1 illustrated in Fig. 1, the camera 14 is provided only at the front part of the vehicle body of the motorcycle 1, but a location at which the camera 14 is provided is not limited to this. The cameras 14 may be provided, for example, at the front and rear parts of the vehicle body of the motorcycle 1, or at the front part and sides of the vehicle body. The camera 14 may also be provided on the front part of the vehicle body of the motorcycle 1 and on the mirror of the motorcycle 1.

The surrounding environment information detected by the camera 14 may be information (for example, relative position, relative distance, relative speed, relative acceleration, passing time difference, time until collision, and the like) related to a distance or direction to an object located around the motorcycle 1, or may be information related to characteristics (for example, the type of the object, the shape of the object, a mark attached to the object, and the like) of the object located around the motorcycle 1. The surrounding environment information detected by the camera 14 mounted on the motorcycle 1 may also include road environment information ahead of the motorcycle 1, which will be described below. Examples of the camera 14 include a monocular camera, a compound eye camera, and the like. Examples of the object include vehicles (for example, two-wheeled vehicles, three-wheeled vehicles, four-wheeled vehicles, or the likes), obstacles (for example, trees, rocks, or the likes), animals, people, and the like. Furthermore, as will be described in detail below, the camera 14 detects a preceding vehicle ahead of the motorcycle 1 in a control mode in which a positional relationship adjustment operation is performed.

The wheel speed sensor 15 is a sensor that detects wheel speed (for example, the rotational frequency of the wheel [rpm] or the distance traveled per unit time [km/h]) of the wheel of the motorcycle 1. The wheel speed sensor 15 may detect other physical quantities that can be substantially converted into the wheel speed of the wheel of the motorcycle 1. In the example of Fig. 1, the wheel speed sensors 15 are provided on the front wheel 2 and the rear wheel 3 of the motorcycle 1, but positions at which the wheel speed sensors 15 are provided are not limited to this. For example, the wheel speed sensor 15 may be provided only on the front wheel 2 or only on the rear wheel 3.

The control device 16 controls a behavior of the motorcycle 1. The control device 16 also has a function of communicating with each device mounted on the motorcycle 1. Part or all of the control device 16 may be configured with a microcomputer, a microprocessor unit, or the like, and may be configured with updatable firmware or the like. Furthermore, part or all of the control device 16 may be a program module executed by instructions from a CPU or the like. In the motorcycle 1, the control device 16 may be integrated into one unit, or may be divided into a plurality of units.

Fig. 2 is a block diagram illustrating an example of a functional configuration of the control device 16. As illustrated in Fig. 2, the control device 16 includes, for example, an acquisition section 16a and an execution section 16b. The control device 16 may be configured without including the acquisition section 16a.

The acquisition section 16a acquires information from each device mounted on the motorcycle 1 and outputs the information to the execution section 16b and the like. For example, the acquisition section 16a acquires information from the camera 14, the wheel speed sensor 15, and the like. Furthermore, for example, when the motorcycle 1 is provided with a communication device capable of communicating with an external device, the acquisition section 16a may acquire various types of information by performing wireless communication using the communication device. In the present invention, "acquiring information" may include extracting or generating information.

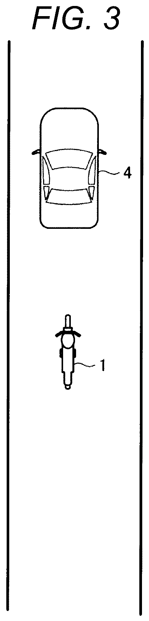

The execution section 16b executes a control mode in which a positional relationship adjustment operation is performed to adjust a positional relationship between the motorcycle 1 and a preceding vehicle (see preceding vehicle 4 in Fig. 3, which will be described below) of the motorcycle 1 to a target positional relationship. That is, the execution section 16b has a function of executing the positional relationship adjustment operation.

Examples of the positional relationship adjustment operation include adaptive cruise control. In the following, an example in which adaptive cruise control is performed as the positional relationship adjustment operation will be described, but the positional relationship adjustment operation is not limited to this. For example, the positional relationship adjustment operation may be an operation that is not cancelled even when a rider operates an accelerator, but changes the target positional relationship in accordance with an amount of accelerator operation by the rider.

In the control mode described above, the execution section 16b can execute the positional relationship adjustment operation. For example, when the motorcycle 1 is in a starting state, the control mode is not executed, but when the rider operates a switch using an input device (including, for example, a push button used for rider's operation) mounted on the motorcycle 1, the control mode is executed.

Here, during execution of the above control mode, the state of the control mode can transition between a state in which the positional relationship adjustment operation is actually being performed and a state in which the positional relationship adjustment operation is temporarily suspended and not being performed. For example, when the control mode is being executed, if a preceding vehicle as an adjustment target for positional relationship is detected by the camera 14, the execution section 16b can execute the positional relationship adjustment operation. On the other hand, when the control mode is being executed, the preceding vehicle as an adjustment target for positional relationship is not detected by the camera 14, the execution section 16b will either not execute the positional relationship adjustment operation or will temporarily suspend the positional relationship adjustment operation that is currently being executed. In this case, for example, the execution section 16b executes an operation to adjust the speed of the motorcycle 1 to target speed in the control mode. The target speed is, for example, set in advance and stored in a memory element of the control device 16. The rider may be able to manually set the target speed.

Fig. 3 is a schematic diagram illustrating a state in which the motorcycle 1 is traveling behind the preceding vehicle 4 of the motorcycle 1. In the example of Fig. 3, the camera 14 detects the preceding vehicle 4 traveling ahead of the motorcycle 1 in the same lane as the motorcycle 1. In this case, when the execution section 16b executes the positional relationship adjustment operation, the positional relationship between the motorcycle 1 and the preceding vehicle 4 can be adjusted to the target positional relationship. This allows the motorcycle 1 to follow the preceding vehicle 4.

In the example of Fig. 3, the preceding vehicle 4 is a four-wheeled automobile, but is not limited to this. For example, the preceding vehicle 4 may be a motorcycle, a three-wheeled motor vehicle, or the like.

In the positional relationship adjustment operation, for example, a target passing time difference is set, which is a target value for a passing time difference (specifically, the time it takes for the motorcycle 1 to pass a current position of the preceding vehicle 4 from the current time) between the motorcycle 1 and the preceding vehicle 4, and the execution section 16b controls the speed of the motorcycle 1 so that the passing time difference is maintained at the target passing time difference. In other words, the positional relationship in which the above-mentioned passing time difference becomes the target passing time difference corresponds to the target positional relationship. In such control, for example, the acquisition section 16a acquires the above-mentioned passing time difference based on the surrounding environment information of the motorcycle 1, and the execution section 16b controls the speed of the motorcycle 1 as described above based on the passing time difference acquired by the acquisition section 16a.

In addition, in the positional relationship adjustment operation, for example, a target inter-vehicle distance is set, which is a target value for an inter-vehicle distance between the motorcycle 1 and the preceding vehicle 4, and the execution section 16b may control the speed of the motorcycle 1 so that the inter-vehicle distance is maintained at the target inter-vehicle distance. In this case, the positional relationship in which the inter-vehicle distance becomes the target inter-vehicle distance corresponds to the target positional relationship. The inter-vehicle distance may be a distance in a direction along the lane on which the motorcycle 1 is traveling, or may be a distance in a straight line. In such control, for example, the acquisition section 16a acquires the above-mentioned inter-vehicle distance based on the surrounding environment information of the motorcycle 1, and the execution section 16b can control the speed of the motorcycle 1 as described above based on the inter-vehicle distance acquired by the acquisition section 16a.

The target positional relationship may be a target value for a relative distance between the motorcycle 1 and the preceding vehicle 4, a target value for relative speed between the motorcycle 1 and the preceding vehicle 4, or a target value for possibility of collision (for example, Time To Collision (TTC), Enhanced Time To Collision (ETTC), or the like) between the motorcycle 1 and the preceding vehicle 4.

Furthermore, for example, the execution section 16b controls the speed of the motorcycle 1 based on information about the speed of the motorcycle 1 acquired based on wheel speed of the front wheel 2 and wheel speed of the rear wheel 3.

A method by which the execution section 16b controls the speed of the motorcycle 1 is not particularly limited.

For example, the execution section 16b may control the speed of the motorcycle 1 by controlling a driving force acting on the motorcycle 1 to control increase or decrease of acceleration of the motorcycle 1. The driving force can be controlled by, for example, the execution section 16b controlling the operation of the drive source 11. The execution section 16b may also control the speed of the motorcycle 1 by controlling the driving force acting on the motorcycle 1 to control increase or decrease of deceleration of the motorcycle 1.

Alternatively, for example, the execution section 16b may control the speed of the motorcycle 1 by controlling a braking force acting on the wheel of the motorcycle 1 to control the deceleration of the motorcycle 1. The braking force can be controlled by, for example, the execution section 16b controlling an operation of the braking force control unit 12. The execution section 16b may also control the speed of the motorcycle 1 by controlling the braking force acting on the wheel of the motorcycle 1 to control acceleration of the motorcycle 1.

In this way, the positional relationship adjustment operation is performed by automatically controlling the speed of the motorcycle 1 without relying on rider's acceleration/deceleration operations (that is, accelerator and brake operations).

### <Operation of Control Device>

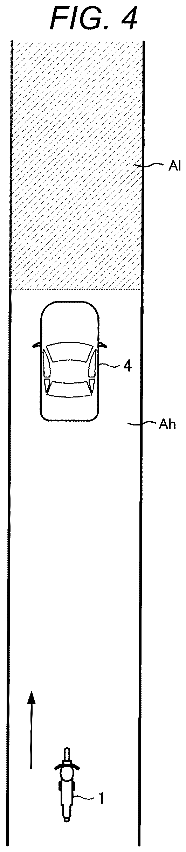

An operation of the control device 16 according to this embodiment will be described with reference to Figs. 4 to 6.

In this embodiment, in the above-mentioned control mode, the execution section 16b determines whether a sudden change in an amount of light in surrounding environment of the motorcycle 1 is predicted based on information about the road environment ahead of the motorcycle 1, and when it is determined that such a sudden change is predicted, executes a safety operation for the rider of the motorcycle 1.

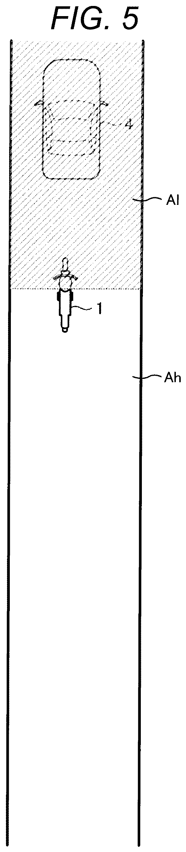

Fig. 4 is a schematic diagram illustrating an example of a state immediately before the motorcycle 1 enters a road Al with a lower amount of light in surrounding environment from a road Ah with a higher amount of light in surrounding environment. Fig. 5 is a schematic diagram illustrating an example of a state immediately after the motorcycle 1 enters the road Al (hereinafter also referred to as a low-light road Al) with a lower amount of light in surrounding environment from the road Ah (hereinafter also referred to as a high-light road Ah) with a higher amount of light in surrounding environment.

When the amount of light in surrounding environment changes suddenly while the motorcycle 1 is traveling (for example, when the motorcycle 1 enters a darker area from a brighter area), it is expected that the camera 14 will be delayed to acquire surrounding environment information immediately after the sudden change in the amount of light. This is because it takes a certain time (for example, several milliseconds to several seconds) for the field of view of the camera 14 to adapt to the sudden change in the amount of light.

When the camera 14 is delayed in acquiring the surrounding environment information, it is necessary to consider a possibility that, for example, detection of the preceding vehicle 4 may be delayed after a sudden change in the amount of light in surrounding environment, causing the motorcycle 1 to suddenly decelerate. It is also necessary to consider a possibility that sudden deceleration of the motorcycle 1 may reduce stability of a vehicle body behavior of the motorcycle 1 and safety of the rider of the motorcycle 1.

For example, in the example of Fig. 4, the preceding vehicle 4 is traveling ahead of the motorcycle 1, and the motorcycle 1 is accelerated so that the positional relationship between the motorcycle 1 and the preceding vehicle 4 becomes the target positional relationship through the positional relationship adjustment operation. In this state, when the motorcycle 1 enters the low-light road Al from the high-light road Ah (that is, the amount of light in surrounding environment of the motorcycle 1 suddenly decreases) and gets close to the preceding vehicle 4 (Fig. 5), the field of view of the camera 14 will require a certain amount of time to adapt to the dark immediately after entering the low-light road Al, which may result in a delay in detecting the preceding vehicle 4. As a result, when the field of view of the camera 14 adapts to the dark and the camera 14 detects the preceding vehicle 4, the positional relationship between the motorcycle 1 and the preceding vehicle 4 can become closer to each other than the target positional relationship. Therefore, after entering the low-light road Al, the positional relationship adjustment operation may cause the motorcycle 1 to suddenly decelerate so that the positional relationship between the two is adjusted to the target positional relationship.

In contrast to this, in this embodiment, in the above-described control mode, it is determined whether a sudden change in the amount of light in surrounding environment of the motorcycle 1 is predicted based on information about the road environment ahead of the motorcycle 1, and when it is determined that such a sudden change is predicted, a safety operation is taken for the rider of the motorcycle 1. This allows the motorcycle 1 equipped with the camera 14 to predict sudden changes in the amount of light in surrounding environment in advance and perform a safety operation before the sudden change occurs, thereby preventing the motorcycle 1 from suddenly decelerating after the sudden change occurs, thereby improving the stability of a vehicle body behavior of the motorcycle 1 and the safety of the rider of the motorcycle 1.

Although details will be described below, a situation in which the safety operation is performed by the execution section 16b is not limited to the examples illustrated in Figs. 4 and 5. Fig. 4 illustrates an example in which the preceding vehicle 4 is traveling ahead of the motorcycle 1, but the embodiment is not limited to this. For example, the execution section 16b may execute a safety operation when the preceding vehicle 4 is not traveling ahead of the motorcycle 1. Furthermore, in Fig. 4, an example is illustrated in which the motorcycle 1 is accelerated so that the positional relationship between the motorcycle 1 and the preceding vehicle 4 becomes the target positional relationship through the positional relationship adjustment operation, but the embodiment is not limited to this. For example, the execution section 16b may execute a safety operation when the motorcycle 1 is decelerating so that the positional relationship becomes the target positional relationship. Furthermore, the execution section 16b may execute a safety operation when the positional relationship adjustment operation is not being executed.

Although the details will be described below, an example is illustrated in Figs. 4 and 5, in which the motorcycle 1 enters the low-light road Al from the high-light road Ah, but the present invention is not limited to this. For example, the execution section 16b may execute a safety operation when it is determined that the motorcycle 1 is predicted to enter the high-light road Ah from the low-light road Al (that is, a sudden increase in the amount of light in surrounding environment of the motorcycle 1).

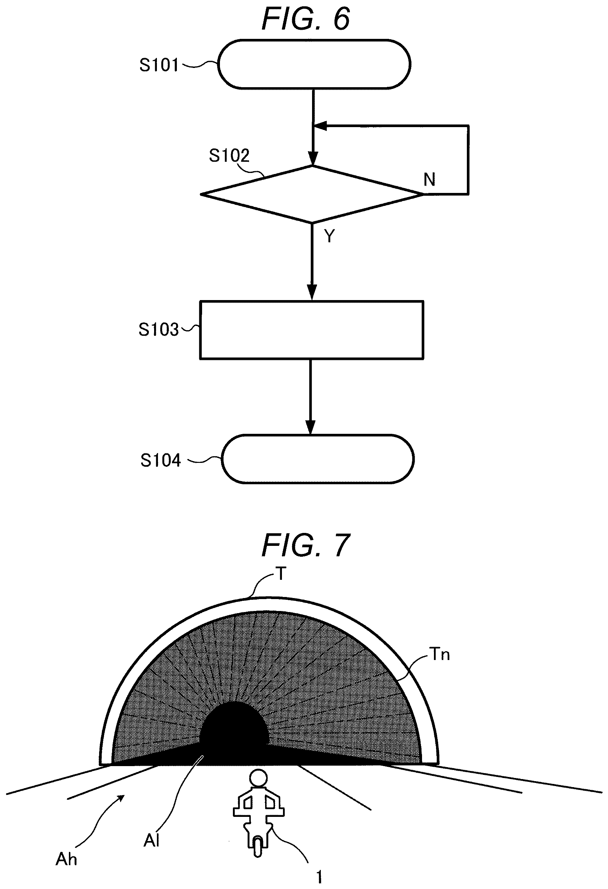

Fig. 6 is a flowchart illustrating an example of flow (control flow) of processing performed by the control device 16 during execution of the above-described control mode. Step S101 in Fig. 6 corresponds to the start of the control flow illustrated in Fig. 6, and Step S104 corresponds to the end of the control flow. The control flow illustrated in Fig. 6 may be performed while the positional relationship adjustment operation is being performed in the above-described control mode, or may be performed when the positional relationship adjustment operation is not being performed. The positional relationship adjustment operation may be executed at any timing in the control flow illustrated in Fig. 6.

After the control flow in Fig. 6 is started, in Step S102, the execution section 16b determines whether a sudden change in the amount of light in the surrounding environment of the motorcycle 1 is predicted based on information about the road environment ahead of the motorcycle 1. When it is determined in Step S102 that a sudden change in the amount of light is predicted, the process of Step S103 is carried out. In the example of Fig. 6, when it is not determined in Step S102 that a sudden change in the amount of light is predicted, the process of Step S102 is performed again. When it is determined in Step S102 that the sudden change in the amount of light is not predicted, the execution section 16b may end the process.

The road environment information refers to information that indicates the environment of the road ahead of (that is, in a traveling direction) the motorcycle 1 out of the environmental information of the road on which the motorcycle 1 is traveling. The road environment information includes, for example, information indicating the presence of a specific structure on the road ahead of the motorcycle 1, information indicating the presence of part of a specific structure on the road ahead, information indicating the presence of specific equipment on the road ahead, and information indicating the weather on the road ahead.

The road environment information can be acquired based on, for example, output information (that is, images captured by the camera 14, or the like) from the camera 14. The road environment information may be information acquired, for example, by wireless communication using a communication device mounted on the motorcycle 1 and capable of communicating with an external device. The road environment information may be information acquired from map information.

For example, the execution section 16b may determine, based on the road environment information, whether a sudden decrease in the amount of light in the surrounding environment of the motorcycle 1 is predicted, or the execution section 16b may determine, based on the road environment information, whether a sudden increase in the amount of light is predicted. Furthermore, for example, the execution section 16b may determine both whether a sudden decrease in the amount of light is predicted and whether a sudden increase in the amount of light is predicted based on the road environment information.

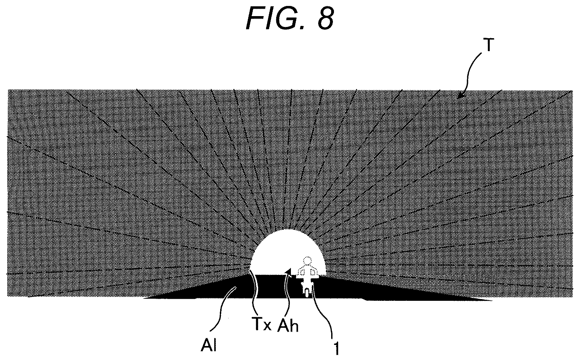

The method of determining whether a sudden change in the amount of light is predicted based on the road environment information is not particularly limited. For example, when the road environment information includes information indicating that an entrance Tn or an exit Tx of a tunnel T is located ahead of the motorcycle 1, the execution section 16b determines that a sudden change in the amount of light in the surrounding environment of the motorcycle 1 is predicted (that is, predicts a sudden change in the amount of light in the surrounding environment). Specifically, in this case, as illustrated in Fig. 7, when the road environment information includes information indicating that the entrance Tn of the tunnel T is located ahead of the motorcycle 1, it is determined that a sudden decrease in the amount of light in the surrounding environment of the motorcycle 1 is predicted (that is, a sudden decrease in the amount of light in the surrounding environment is predicted), and as illustrated in Fig. 8, when the road environment information includes information indicating that the exit Tx of the tunnel T is located ahead of the motorcycle 1, it is determined that a sudden increase in the amount of light in the surrounding environment of the motorcycle 1 is predicted (that is, a sudden increase in the amount of light in the surrounding environment is predicted) .

In addition, the execution section 16b may determine that a sudden change in the amount of light in the surrounding environment of the motorcycle 1 is predicted (that is, may predict a sudden change in the amount of light in the surrounding environment) when, for example, the above-described road environment information includes information indicating that there is an entrance or exit to a covered road ahead of the motorcycle 1.

Furthermore, for example, when the road environment information includes information indicating the weather on the road ahead of the motorcycle 1, the execution section 16b may determine whether a sudden change in the amount of light is predicted based on the information indicating the weather in addition to the above-described determination criteria. For example, the execution section 16b may determine that a sudden change in the amount of light is predicted when the road environment information includes information indicating that the entrance Tn or the exit Tx of the tunnel T is located ahead of the motorcycle 1 and information indicating that the weather on the road ahead is sunny.

After Step S102, in Step S103, the execution section 16b executes a safety operation for the rider of the motorcycle 1. The safety operation is an operation that improves the safety of the rider of the motorcycle 1.

Examples of the above-described safety operation include an operation to suppress the acceleration of the motorcycle 1, a notification operation to encourage the rider to suppress the acceleration of the motorcycle 1, an operation to decelerate the motorcycle 1, and a notification operation to encourage the rider to decelerate the motorcycle 1. Examples of the operation to suppress the acceleration include an operation to reduce the acceleration of the motorcycle 1 compared to when the safety operation is not performed, and an operation to lower an upper limit of the acceleration of the motorcycle 1 compared to when the safety operation is not performed. The notification operation for encouraging the rider to suppress acceleration and the notification operation for encouraging the rider to decelerate are operations that the execution section 16b causes the notification unit 13 to notify.

Also, for example, when the positional relationship adjustment operation is not being performed and a speed adjustment operation is being performed to adjust the speed of the motorcycle 1 to a target speed, the safety operation may be an operation that makes the target speed in the speed adjustment operation lower than when the safety operation is not being performed.

The execution section 16b may execute the safety operation in the control mode, but it is preferable to execute the safety operation while the positional relationship adjustment operation is being performed. An example of the safety operation performed during the positional relationship adjustment operation includes an operation for correcting the target positional relationship. Specifically, the operation of correcting the target positional relationship includes, for example, an operation of making the target passing time difference, which is the target value of the passing time difference between the motorcycle 1 and the preceding vehicle 4, larger than when the safety operation is not performed. In addition, the operation of correcting the target positional relationship may include, for example, an operation of increasing the target inter-vehicle distance, which is the target value of the inter-vehicle distance between the motorcycle 1 and the preceding vehicle 4, compared to when the safety operation is not performed.

Furthermore, examples of the safety operation that is performed during the positional relationship adjustment operation include an operation that corrects a speed change rate of the motorcycle 1 during the positional relationship adjustment operation. Specifically, the operation of correcting the speed change rate is, for example, an operation of suppressing acceleration of the motorcycle 1 during the positional relationship adjustment operation. Examples of the operation that suppresses the acceleration include an operation that reduces the acceleration of the motorcycle 1 during the positional relationship adjustment operation compared to when the safety operation is not performed, and an operation that lowers an upper limit value of the acceleration of the motorcycle 1 during the positional relationship adjustment operation compared to when the safety operation is not performed.

The safety operation may be, for example, an operation in which the notification unit 13 notifies the rider that a sudden change in the amount of light in the surrounding environment of the motorcycle 1 is predicted. Furthermore, when the positional relationship adjustment operation is being executed, the safety operation may be, for example, an operation of stopping the execution of the positional relationship adjustment operation.

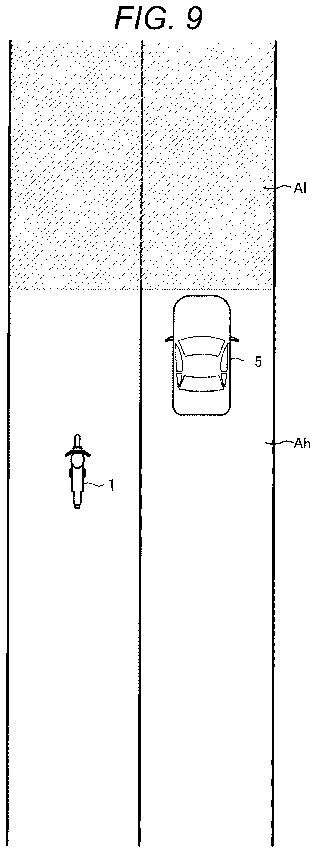

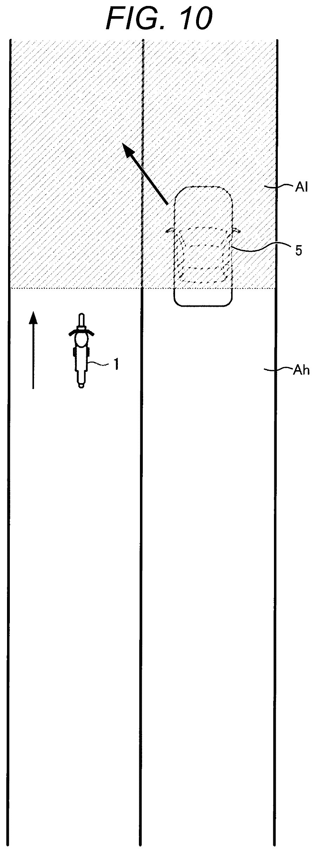

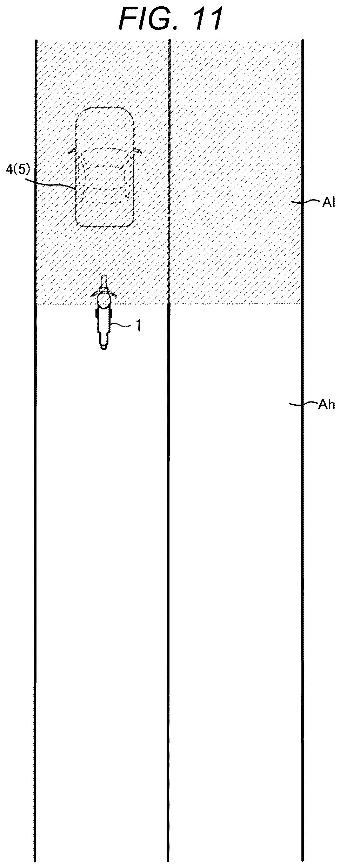

As described above, the execution section 16b may execute the safety operation when the preceding vehicle 4 is not traveling ahead of the motorcycle 1. For example, the execution section 16b may execute the safety operation while the execution section 16b is executing an operation to adjust the speed of the motorcycle 1 to the target speed in the control mode. Figs. 9 to 11 are schematic diagrams illustrating examples of a situation in which a safety operation can be performed when there is no preceding vehicle 4 traveling ahead of the motorcycle 1. Figs. 9 to 11 are in chronological order, with Fig. 10 illustrating an example of a state after a predetermined time has elapsed from a state of Fig. 9, and Fig. 11 illustrating an example of a state after a predetermined time has elapsed from the state of Fig. 10.

For example, when the motorcycle 1 is traveling on the high-light road Ah, a case is considered where another vehicle 5 traveling diagonally ahead of the motorcycle 1 and not recognized as a preceding vehicle (Fig. 9) may move ahead of the motorcycle 1 and become the preceding vehicle 4 immediately after the motorcycle 1 enters the low-light road Al (Figs. 10 and 11). In this case, it is assumed that the field of view of the camera 14 requires a certain time for dark adaptation immediately after the motorcycle 1 enters the low-light road Al, and detection of the preceding vehicle 4 is delayed. It is also conceivable that the delay in detecting the preceding vehicle 4 will result in a delay in starting the positional relationship adjustment operation. In this case, when the motorcycle 1 enters the low-light road Al, the motorcycle 1 is traveling at the target speed or is accelerating toward the target speed. Therefore, when the field of view of the camera 14 has adapted to the dark and the preceding vehicle 4 is detected, there is a high possibility that the motorcycle 1 and the preceding vehicle 4 are in close proximity to each other, and the motorcycle 1 may suddenly decelerate due to the start of the positional relationship adjustment operation.

In response to this, the execution section 16b executes a safety operation, which can prevent the motorcycle 1 from suddenly decelerating due to the start of a positional relationship adjustment operation after entering the low-light road Al from the high-light road Ah (that is, after a sudden change in the amount of light in the surrounding environment of the motorcycle 1).

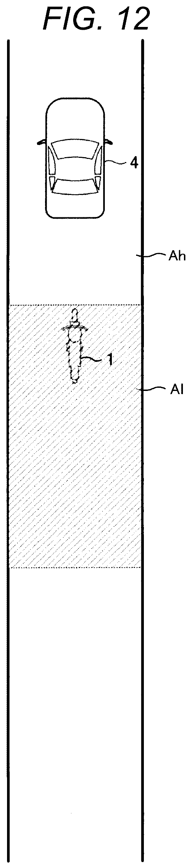

Furthermore, as described above, for example, the execution section 16b may execute a safety operation when it is determined that the motorcycle 1 is predicted to enter the high-light road Ah from the low-light road Al. Fig. 12 is a schematic diagram illustrating an example of a state immediately before the motorcycle 1 enters the high-light road Ah from the low-light road Al. In the example of Fig. 12, the preceding vehicle 4 is traveling ahead of the motorcycle 1, and the execution section 16b is executing a positional relationship adjustment operation. When the motorcycle 1 enters the high-light road Ah from the low-light road Al, the field of view of the camera 14 takes a certain time to adapt to light immediately after entering the road, which may result in a delay in detecting the preceding vehicle 4. It is necessary to consider that when the camera 14 is delayed in detecting the presence of the preceding vehicle 4, the motorcycle 1 may suddenly decelerate due to the positional relationship adjustment operation.

In contrast, when it is determined that the vehicle is predicted to enter the high-light road Ah from the low-light road Al, the execution section 16b executes a safety operation, thereby predicting a sudden change in the amount of light in the surrounding environment in advance and executing the safety operation before the sudden change occurs. Therefore, sudden deceleration of the motorcycle 1 immediately after entering the high-light road Ah from the low-light road Al can be suppressed. This improves the stability of the vehicle body behavior of the motorcycle 1 and the safety of the rider.

When the execution section 16b determines in step S102 that a sudden change in the amount of light in the surrounding environment of the motorcycle 1 is predicted based on the road environment information including information indicating that the entrance Tn or the exit Tx of the tunnel T is present ahead of the motorcycle 1, it is preferable that the execution section 16b executes a safety operation before the motorcycle 1 passes through the entrance Tn or the exit Tx of the tunnel T based on the position information of the motorcycle 1. In other words, the execution section 16b can execute the safety operation when the position information indicates that the motorcycle 1 is at a position before passing through the entrance Tn or the exit Tx of the tunnel T. The position information can be acquired based on information transmitted from a Global Positioning System (GPS) satellite, for example.

In the example of Fig. 6, after the process of Step S103 is performed, the execution section 16b ends the process, but the embodiment is not limited to this. For example, after the process of Step S103 is performed, the execution section 16b may perform the process of Step S102 again.

### <Modification Example>

In the control device 16 according to the present invention, the execution section 16b may switch between a first mode in which the safety operation is executed and a second mode in which the safety operation is not executed. In this case, the control flow described with reference to Fig. 6 corresponds to a control flow in the first mode.

The execution section 16b may switch between the first mode and the second mode automatically, or may switch between the first mode and the second mode based on manual setting information entered by the rider of the motorcycle 1.

When automatically switching between these modes, the execution section 16b automatically switches between the first mode and the second mode depending on, for example, whether there is a following vehicle traveling behind the motorcycle 1. Specifically, for example, the execution section 16b selects the first mode when there is a vehicle following the motorcycle 1, and selects the second mode when there is no vehicle following the motorcycle 1. For example, when a surrounding environment sensor (for example, radar, camera, or the like) is mounted on the rear of the vehicle body of the motorcycle 1, the presence or absence of the following vehicle can be determined based on the output information of the surrounding environment sensor. When there is a following vehicle, a sudden deceleration of the motorcycle 1 may cause a collision between the motorcycle 1 and the following vehicle. Therefore, by automatically switching to the first mode when there is a vehicle following the motorcycle 1, the effect of suppressing sudden deceleration of the motorcycle 1 due to the safety operation is effectively achieved.

### <Effects>

Effects of the control device 16 according to the embodiment of the present invention will be described.

The control device 16 controls the behavior of the motorcycle 1 and includes the execution section 16b that executes a control mode in which a positional relationship adjustment operation is performed to adjust the positional relationship between the motorcycle 1 and the vehicle 4 preceding the motorcycle 1 to a target positional relationship by automatically accelerating or decelerating the motorcycle 1. In the control mode, the preceding vehicle 4 is detected by the camera 14 mounted on the motorcycle 1, and in the control mode, the execution section 16b determines whether a sudden change in the amount of light in the surrounding environment of the motorcycle 1 is predicted based on information about the road environment ahead of the motorcycle 1, and when it is determined that such a sudden change is predicted, performs a safety operation for the rider of the motorcycle 1.

This allows the motorcycle 1 equipped with the camera 14 to predict a sudden change in the amount of light in the surrounding environment in advance and perform an safety operation before the sudden change occurs. Therefore, even when there is a delay in detecting the preceding vehicle 4 after the sudden change in the amount of light in the surrounding environment, the motorcycle 1 can be prevented from suddenly decelerating after the sudden change occurs, thereby improving the stability of the vehicle body behavior of the motorcycle 1 and the safety of the rider of the motorcycle 1.

The safety operation preferably includes an operation to suppress acceleration of the motorcycle 1. This allows the motorcycle 1 to accelerate more slowly before a sudden change in the amount of light in the surrounding environment occurs, compared to when the safety operation is not performed, and even when detection of the preceding vehicle 4 is delayed after a sudden change in the amount of light in the surrounding environment, the motorcycle 1 can be more effectively prevented from decelerating suddenly after the sudden change occurs. This can further improve the stability of the vehicle body behavior of the motorcycle 1 and the safety of the rider of the motorcycle 1.

In addition, when the positional relationship adjustment operation is not performed in the control mode, the execution section 16b performs a speed adjustment operation to adjust the speed of the motorcycle 1 to a target speed, and it is preferable that the safety operation includes an operation to make the target speed in the speed adjustment operation lower than when the safety operation is not performed. As a result, the speed of the motorcycle 1 before the sudden change in the amount of light is lower than when the safety operation is not performed, so even when the detection of the preceding vehicle 4 is delayed after the sudden change, the motorcycle 1 is less likely to suddenly decelerate. This can further improve the stability of the vehicle body behavior of the motorcycle 1 and the safety of the rider of the motorcycle 1.

Furthermore, it is preferable that the execution section 16b executes the safety operation while executing the positional relationship adjustment operation. During the positional relationship adjustment operation, when the field of view of the camera 14 takes time to adapt to the sudden change in the amount of light in the surrounding environment and the detection of the preceding vehicle 4 is delayed, the positional relationship between the motorcycle 1 and the preceding vehicle 4 may become closer to each other than the case of the target positional relationship. In this case, the motorcycle 1 may suddenly decelerate due to the positional relationship adjustment operation so that the positional relationship between the motorcycle 1 and the preceding vehicle 4 is adjusted to the target positional relationship. Therefore, during the positional relationship adjustment operation, the stability of the vehicle body behavior of the motorcycle 1 and the safety of the rider of the motorcycle 1 are more likely to be reduced. Therefore, by carrying out the above-described safety operation while carrying out the positional relationship adjustment operation, the effect of improving the stability of the vehicle body behavior of the motorcycle 1 and the safety of the rider of the motorcycle 1 is significantly achieved.

Furthermore, it is preferable that the safety operation includes, in the positional relationship adjustment operation, an operation of correcting the target positional relationship. This prevents the positional relationship between the motorcycle 1 and the preceding vehicle 4 from becoming closer than the case of the target positional relationship, even when it takes time for the field of view of the camera 14 to adapt to a sudden change in the amount of light in the surrounding environment, thereby reducing the possibility of the motorcycle 1 suddenly decelerating. Therefore, by performing the above-described safety operation while performing the positional relationship adjustment operation, the stability of the vehicle body behavior of the motorcycle 1 and the safety of the rider of the motorcycle 1 can be further improved.

Preferably, the safety operation includes an operation for correcting the speed change rate of the motorcycle 1 in the positional relationship adjustment operation. This prevents the positional relationship between the motorcycle 1 and the preceding vehicle 4 from becoming closer than the case of the target positional relationship, even when it takes time for the field of view of the camera 14 to adapt to a sudden change in the amount of light in the surrounding environment, thereby reducing the possibility of the motorcycle 1 suddenly decelerating. Therefore, by performing the above-described safety operation while performing the positional relationship adjustment operation, the stability of the vehicle body behavior of the motorcycle 1 and the safety of the rider of the motorcycle 1 can be further improved.

The road environment information is preferably acquired based on output information from the camera 14. By using the road environment information obtained from the camera 14, responsiveness of the safety operation can be improved. This can further improve the stability of the vehicle body behavior of the motorcycle 1 and the safety of the rider of the motorcycle 1.

In addition, in the control mode, it is preferable that the execution section 16b determines whether a sudden decrease in the amount of light in the surrounding environment is predicted based on the road environment information, and executes the safety operation when it is determined that the sudden decrease is predicted. As illustrated in the examples of Figs. 4 and 5, when the motorcycle 1 enters the low-light road Al from the high-light road Ah, the field of view of the camera 14 takes time to adapt to the dark immediately after entering, which may result in a delay in detecting the positional relationship between the motorcycle 1 and the preceding vehicle 4. Therefore, the motorcycle 1 is more likely to suddenly decelerate. Therefore, by predicting a sudden decrease in the amount of light in the surrounding environment and performing the safety operation when such a decrease is predicted, the effect of improving the stability of the vehicle body behavior of the motorcycle 1 and the safety of the rider of the motorcycle 1 can be more significantly achieved.

In addition, in the control mode, it is preferable that the execution section 16b determines whether a sudden increase in the amount of light in the surrounding environment is predicted based on the road environment information, and executes the safety operation when it is determined that the sudden increase is predicted. As illustrated in the example of Fig. 12, when the motorcycle 1 enters the high-light road Ah from the low-light road Al, the field of view of the camera 14 takes time to adapt to light immediately after entering, which may result in a delay in detecting the positional relationship between the motorcycle 1 and the preceding vehicle 4. Therefore, the motorcycle 1 is more likely to suddenly decelerate. Therefore, by predicting a sudden increase in the amount of light in the surrounding environment and performing the safety operation when such a sudden increase is predicted, the effect of improving the stability of the vehicle body behavior of the motorcycle 1 and the safety of the rider of the motorcycle 1 can be more significantly achieved.

In addition, in the above-described control mode, it is preferable that the execution section 16b determines that the sudden change in the amount of light in the surrounding environment is predicted when the road environment information includes information indicating that the entrance Tn or the exit Tx of the tunnel T is present ahead of the motorcycle 1. When the motorcycle 1 passes through the entrance Tn of the tunnel T, the amount of light in the surrounding environment of the motorcycle 1 may change particularly suddenly (specifically, the amount of light in the surrounding environment may decrease particularly suddenly). Furthermore, when the motorcycle 1 passes through the exit Tx of the tunnel T, the amount of light in the surrounding environment of the motorcycle 1 may change particularly suddenly (specifically, the amount of light in the surrounding environment may increase particularly suddenly). For these reasons, when the motorcycle 1 passes through the entrance or exit of the tunnel T, it is more likely that the field of view of the camera 14 will take a long time to adapt immediately after passing through. Therefore, when the road environment information ahead of the motorcycle 1 includes information indicating the presence of the entrance Tn or the exit Tx of the tunnel T, it is determined that a sudden change in the amount of light is predicted (that is, it is determined that a sudden change in the amount of light is predicted), thereby more significantly improving the stability of the vehicle body behavior of the motorcycle 1 and the safety of the rider of the motorcycle 1 by performing the safety operation.

Furthermore, when it is determined that a sudden change in the amount of light in the surrounding environment is predicted in the control mode, it is preferable that the execution section 16b executes the safety operation before the motorcycle 1 passes through the entrance Tn or the exit Tx of the tunnel T based on the position information of the motorcycle 1. This makes it more likely that the safety operation will be more reliably performed before the motorcycle 1 passes through the entrance Tn or the exit Tx of the tunnel T, thereby further improving the stability of the vehicle body behavior of the motorcycle 1 and the safety of the rider of the motorcycle 1.

Preferably, the execution section 16b switches between the first mode in which the safety operation is executed and the second mode in which the safety operation is not executed. This allows the rider to switch between performing and not performing the safety operation according to the riding conditions or the rider's preference.

The control device 16 of the present invention may be implemented in any of the above-described exemplary aspects alone or in combination.

Furthermore, the present invention is not limited to the description of the embodiment. For example, only part of the embodiment may be implemented.

As described above, the control device and the control method according to the present invention include the following embodiments.
[1] A control device (16) for controlling a behavior of a motorcycle (1), including:
   an execution section (16b) that executes a control mode in which a positional relationship adjustment operation is executed to adjust a positional relationship between the motorcycle (1) and a preceding vehicle (4) of the motorcycle (1) to a target positional relationship by automatically accelerating or decelerating the motorcycle (1), where
   in the control mode, the preceding vehicle (4) is detected by a camera (14) mounted on the motorcycle (1), and
   in the control mode, the execution section (16b)
   determines whether a sudden change in an amount of light in the surrounding environment of the motorcycle (1) is predicted based on road environment information ahead of the motorcycle (1), and
   executes a safety operation for a rider of the motorcycle (1) when it is determined that the sudden change is predicted.
[2] The control device (16) of [1], where the safety operation includes an operation to suppress acceleration of the motorcycle (1).
[3] The control device (16) of [1] or [2], where in the control mode,
   the execution section (16b) executes a speed adjustment operation to adjust speed of the motorcycle (1) to a target speed when the positional relationship adjustment operation is not executed, and
   the safety operation includes an operation of lowering the target speed in the speed adjustment operation to a speed lower than that in a case where the safety operation is not performed.
[4] The control device (16) of any one of [1] to [3], where the execution section (16b) executes the safety operation during execution of the positional relationship adjustment operation.
[5] The control device (16) of [4], where the safety operation includes an operation of correcting the target positional relationship in the positional relationship adjustment operation.
[6] The control device (16) of [4] or [5], where the safety operation includes an operation of correcting a speed change rate of the motorcycle (1) in the positional relationship adjustment operation.
[7] The control device (16) of any one of [1] to [6], where the road environment information is acquired based on output information of the camera (14).
[8] The control device (16) of any one of [1] to [7], where in the control mode, the execution section (16b) determines whether a sudden decrease in the amount of light in the surrounding environment is predicted based on the road environment information, and executes the safety operation when it is determined that the sudden decrease is predicted.
[9] The control device (16) of any one of [1] to [7], where in the control mode, the execution section (16b) determines whether a sudden increase in the amount of light in the surrounding environment is predicted based on the road environment information, and executes the safety operation when it is determined that the sudden increase is predicted.
[10] The control device (16) of any one of [1] to [7], where in the control mode, the execution section (16b) determines that the sudden change in the amount of light in the surrounding environment is predicted when the road environment information includes information indicating that an entrance (Tn) or an exit (Tx) of a tunnel (T) is present ahead of the motorcycle (1).
[11] The control device (16) of [8], where in the control mode, the execution section (16b) determines that the sudden decrease in the amount of light in the surrounding environment is predicted when the road environment information includes information indicating that an entrance (Tn) of a tunnel (T) is present ahead of the motorcycle (1).
[12] The control device (16) of [9], where in the control mode, the execution section (16b) determines that the sudden increase in the amount of light in the surrounding environment is predicted when the road environment information includes information indicating that an exit (Tx) of a tunnel (T) is present ahead of the motorcycle (1).
[13] The control device (16) of [10], where when it is determined that the sudden change in the amount of light in the surrounding environment is predicted in the control mode, the execution section (16b) executes the safety operation based on position information of the motorcycle (1) before the motorcycle (1) passes through the entrance (Tn) or the exit (Tx) of the tunnel (T).
[14] The control device (16) of any one of [1] to [13] where the execution section (16b) switches between a first mode in which the safety operation is executed and a second mode in which the safety operation is not executed.
[15] A control method for controlling a behavior of a motorcycle (1), including:
   executing a control mode by an execution section (16b) of a control device (16) in which a positional relationship adjustment operation is performed to adjust a positional relationship between the motorcycle (1) and a preceding vehicle (4) of the motorcycle (1) to a target positional relationship by automatically accelerating or decelerating the motorcycle (1);
   detecting, in the control mode, the preceding vehicle (4) by a camera (14) mounted on the motorcycle (1); and
   in the control mode,
   causing the execution section (16b) to determine whether a sudden change in an amount of light in the surrounding environment of the motorcycle (1) is predicted based on road environment information ahead of the motorcycle (1), and
   to execute a safety operation for a rider of the motorcycle (1) when it is determined that the sudden change is predicted.

## Claims

1. A control device (16) for controlling a behavior of a motorcycle (1), comprising:
an execution section (16b) that executes a control mode in which a positional relationship adjustment operation is executed to adjust a positional relationship between the motorcycle (1) and a preceding vehicle (4) of the motorcycle (1) to a target positional relationship by automatically accelerating or decelerating the motorcycle (1), where
in the control mode, the preceding vehicle (4) is detected by a camera (14) mounted on the motorcycle (1), and
in the control mode, the execution section (16b)
determines whether a sudden change in an amount of light in the surrounding environment of the motorcycle (1) is predicted based on road environment information ahead of the motorcycle (1), and
executes a safety operation for a rider of the motorcycle (1) when it is determined that the sudden change is predicted.

2. The control device (16) of claim 1, wherein
the safety operation includes an operation to suppress acceleration of the motorcycle (1).

3. The control device (16) of claim 1, wherein
the execution section (16b) executes a speed adjustment operation to adjust speed of the motorcycle (1) to a target speed when the positional relationship adjustment operation is not executed in the control mode, and
the safety operation includes an operation of lowering the target speed in the speed adjustment operation to a speed lower than that in a case where the safety operation is not performed.

4. The control device (16) of claim 1, wherein
the execution section (16b) executes the safety operation during execution of the positional relationship adjustment operation.

5. The control device (16) of claim 4, wherein
the safety operation includes an operation of correcting the target positional relationship in the positional relationship adjustment operation.

6. The control device (16) of claim 4, wherein
the safety operation includes an operation of correcting a speed change rate of the motorcycle (1) in the positional relationship adjustment operation.

7. The control device (16) of claim 1, wherein
the road environment information is acquired based on output information of the camera (14).

8. The control device (16) of claim 1, wherein
in the control mode, the execution section (16b)
determines whether a sudden decrease in the amount of light in the surrounding environment is predicted based on the road environment information, and
executes the safety operation when it is determined that the sudden decrease is predicted.

9. The control device (16) of claim 1, wherein
in the control mode, the execution section (16b)
determines whether a sudden increase in the amount of light in the surrounding environment is predicted based on the road environment information, and
executes the safety operation when it is determined that the sudden increase is predicted.

10. The control device (16) of claim 1, wherein
in the control mode, the execution section (16b) determines that the sudden change in the amount of light in the surrounding environment is predicted when the road environment information includes information indicating that an entrance (Tn) or an exit (Tx) of a tunnel (T) is present ahead of the motorcycle (1).

11. The control device (16) of claim 8, wherein
in the control mode, the execution section (16b) determines that the sudden decrease in the amount of light in the surrounding environment is predicted when the road environment information includes information indicating that an entrance (Tn) of a tunnel (T) is present ahead of the motorcycle (1).

12. The control device (16) of claim 9, wherein
in the control mode, the execution section (16b) determines that the sudden increase in the amount of light in the surrounding environment is predicted when the road environment information includes information indicating that an exit (Tx) of a tunnel (T) is present ahead of the motorcycle (1).

13. The control device (16) of claim 10, wherein
when it is determined that the sudden change in the amount of light in the surrounding environment is predicted in the control mode, the execution section (16b) executes the safety operation based on position information of the motorcycle (1) before the motorcycle (1) passes through the entrance (Tn) or the exit (Tx) of the tunnel (T).

14. The control device (16) of any one of claims 1 to 13, wherein
the execution section (16b) switches between a first mode in which the safety operation is executed and a second mode in which the safety operation is not executed.

15. A control method for controlling a behavior of a motorcycle (1), comprising:
executing a control mode by an execution section (16b) of a control device (16) in which a positional relationship adjustment operation is performed to adjust a positional relationship between the motorcycle (1) and a preceding vehicle (4) of the motorcycle (1) to a target positional relationship by automatically accelerating or decelerating the motorcycle (1);
detecting, in the control mode, the preceding vehicle (4) by a camera (14) mounted on the motorcycle (1); and
in the control mode,
causing the execution section (16b) to determine whether a sudden change in an amount of light in the surrounding environment of the motorcycle (1) is predicted based on road environment information ahead of the motorcycle (1), and
to execute a safety operation for a rider of the motorcycle (1) when it is determined that the sudden change is predicted.
